# EUROPÄISCHE PATENTSCHRIFT

(11) **EP 2 729 357 B1**
(45) Veröffentlichungstag und Bekanntmachung des Hinweises auf die Patenterteilung: **16.12.2015**
(21) Anmeldenummer: 12735253.2
(22) Anmeldetag: 04.07.2012
(51) Int. Cl.: F03D 5/06, F03D 7/00, B63H 9/06, B63B 35/44

(54) **VERFAHREN UND VORRICHTUNG ZUR STEUERUNG EINES GEFESSELTEN FLUGELEMENTS**
METHOD AND DEVICE FOR CONTROLLING A TETHERED FLYING ELEMENT
PROCÉDÉ ET DISPOSITIF DE COMMANDE D'UN ÉLÉMENT VOLANT AMARRÉ

(30) Priorität: 04.07.2011 DE 202011102743 U
(43) Veröffentlichungstag der Anmeldung: 14.05.2014
(73) Patentinhaber: SkySails GmbH, 21079 Hamburg (DE)
(72) Erfinder: ERHARD, Michael, 22761 Hamburg (DE); PAULIG, Xaver, 22769 Hamburg (DE)
(74) Vertreter: Eisenführ Speiser
(86) Internationale Anmeldenummer: PCT/EP2012/062990
(87) Internationale Veröffentlichungsnummer: WO 2013/004728

(56) Entgegenhaltungen:
- WO-A1-2009/026939
- US-B2- 7 504 741

## Beschreibung

Die Erfindung betrifft ein Verfahren zur Steuerung eines gefesselten Flugelements, insbesondere eines Flugdrachens, das mittels zumindest eines Zugseils mit einem Haltepunkt verbunden ist. Insbesondere betrifft die Erfindung einen Einholvorgang für ein solches Flugelement.

Unter einem Flugelement ist hierbei ein aerodynamisch wirksames Profil zu verstehen, welches unter Windanströmung eine aerodynamische Kraft bewirkt. Das Flugelement ist gefesselt, worunter zu verstehen ist, dass das Flugelement mittels zumindest eines Halteelements, insbesondere eines Zugseils, mit einem Haltepunkt verbunden ist. Dieser Haltepunkt kann beispielsweise stationär am Boden oder an einer auf einem Gewässer verankerten Plattform angeordnet sein, beispielsweise für Anwendungsfälle, in denen das Flugelement in einem zyklischen Einhol- und Ausfierprozess zur Erzeugung von Energie aus Windkraft genutzt wird. Der Haltepunkt kann ebenso auf einem Wasserfahrzeug angeordnet sein, um mittels des Flugelements eine Zugkraft als Antriebskraft für dieses Wasserfahrzeug zu erzeugen und zu übertragen. Insbesondere ist es bevorzugt, in diesem Fall den Haltepunkt im Bereich des Vorschiffs anzuordnen, um hierdurch günstige Bedingungen für die Zugkrafteinleitung, den Setz- und den Bergevorgang des Flugelements zu erreichen.

Systeme mit Flugelementen dieser Art sind vorbekannt. So ist beispielsweise aus EP 2 054 295 B1 und WO 2009/026939 A1 ein Flugelement vorbekannt, welches dazu dient, ein Schiff anzutreiben. Weiterhin ist aus US 7,504,741 B2, welche als nächstliegender Stand der Technik betrachtet wird, ein Flugelement bekannt, welches dazu dient, aus regenerativer Windkraftquelle elektrische Energie zu erzeugen. Es ist zu verstehen, dass das so vorbekannte Flugelement und die mit diesem Flugelement aufgebauten vorbekannten Systeme aus Zugseil und Haltepunkt und insbesondere die hierfür vorgesehenen Steuerungseinrichtungen, wie beispielsweise eine unterhalb des Flugelements angeordnete Gondel, von welcher aus sich das Zugseil zum bodenseitigen bzw. schiffseitigen Haltepunkt erstreckt, sich für die Flugelemente und -systeme gemäß dieser Erfindung insbesondere eignen und diese dementsprechend ausgebildet sein können. Die Offenbarung der EP 2 054 295 B1 und der WO 2009/026939 A1 sowie der US 7,504,741 B2 werden diesbezüglich voll umfänglich in Bezug genommen.

Es ist bekannt, beim Starten und Landen solcher Flugelemente durch manuelle und insbesondere durch automatische Steuerungsvorgänge das Flugelement in einer stabilen Lage stationär oder dynamisch in einem Windfenster zu halten. Ein Windfenster definiert sich hierbei solcher Art, dass es ausgehend von einem Haltepunkt und einem in Bezug auf diesen Haltepunkt wirkenden Wind von bestimmter Richtung und Stärke einen Bereich definiert, in dem das Flugelement eine stabile Fluglage bei der gegebenen Zugseillänge einnimmt. Das Windfenster umfasst folglich den in Lee von einer Kurve liegenden kugelabschnitssförmigen Bereich, wobei auf der Kurve das Flugelement stationär gehalten werden kann und der Radius des Kugelabschnitts durch die Zugseillänge definiert wird. Unter einer stabilen Fluglage ist hierbei zu verstehen, dass sich das Flugelement in diesem Windfenster selbständig trägt, d. h. frei von aktiven Antriebseinflüssen in der Lage ist, seine Flugposition zu halten.

Grundsätzlich ist mit einer solchen Vorgehensweise auch bei sich ändernden Windverhältnissen, beispielsweise bei böigen Windverhältnissen, und auch im Falle, dass das Flugelement von einem fahrenden Schiff aus gestartet oder gelandet werden muss, ein in soweit zuverlässiger Start- und Landevorgang durchzuführen. Das Ausfieren des Flugelements und bzw. das Einholen des Flugelements erfolgt hierbei im Zuge von Start und Landung durch entsprechende Einsteuerung des Flugelements und Austarierung etwaiger schwankender Einflüsse aufgrund der Fahrt des Schiffes oder sich ändernder Windbedingungen.

Allerdings nimmt ein solcher Ausfier- und Einholvorgang einen erheblichen Zeitraum in Anspruch und ist darüber hinaus im Hinblick auf die erforderliche Steuerungstechnik sehr aufwendig. Dieser Aufwand erhöht sich insbesondere dann, wenn das Flugelement eine sehr große aerodynamische wirksame Fläche aufweist, beispielsweise eine Fläche über 150 m², insbesondere Flächen im Bereich zwischen 300 und 1.200 m².

Um auch bei solch großskalierten Flugelementen einen steuerungstechnisch zuverlässigen und hinsichtlich des erforderlichen Zeitraums vertretbaren Ausfier- und Einholvorgang durchführen zu können, ist es bekannt, das Flugelement durch Reffleinen in seiner aerodynamisch wirksamen Fläche während des Flugs zu verkleinern. Unter einer Reffung wird in diesem Sinne eine Reduktion der in Zugseilrichtung projizierten Fläche des Flugelements verstanden. Hierdurch kann, sofern eine entsprechend zuverlässige Aufrechterhaltung eines aerodynamisch wirksamen Profils im Zuge des Reffvorgangs sichergestellt ist, auch mit sehr großen Flugelementen ein Start- und Landevorgang durchgeführt werden. Allerdings ist bei dieser Ausführungsform bzw. Vorgehensweise ein erheblicher konstruktiver Aufwand erforderlich, um die entsprechende Verringerung der aerodynamisch wirksamen Fläche in einer zuverlässigen Weise so zu bewerkstelligen, dass hierbei das Flugelement gleichmäßig in Bezug auf seine aerodynamische Mittellängsachse verkleinert wird und hierbei ein zuverlässig steuerbares aerodynamisch wirksames Profil beibehält.

Eine grundsätzliche Problematik, die sich im Zusammenhang mit solchen Flugelementen ergibt, stellt die Notwendigkeit dar, das Flugelement in bestimmten Betriebssituationen in einer möglichst kurzen Zeit und unter möglichst geringer Belastung der Bauelemente des gesamten Flugelementsystems einholen zu können. Eine solche Situation kann beispielsweise auftreten, wenn durch einen raschen Wetterumschwung eine Wettersituation aufzieht, in welcher ein zuverlässiger Betrieb des Flugelementsystems nicht mehr gewährleistet ist und das Flugelement daher in kurzer Zeit aus gegebenenfalls großer Höhe eingeholt werden muss. Im speziellen Fall der Verwendung des Flugelements als Schiffsantrieb kann eine solche Situation, welche einen schnellen Einholvorgang erforderlich macht, beispielsweise im Zuge von plötzlichen Kursänderungen, Manövern, Ausweichbewegungen des Schiffes, beispielsweise in Folge einer Kollisionsgefahr, auftreten.

Beim Einsatz solcher Flugelemente in Windenergieanlagen, die durch zyklisches Ausfieren und Einholen die Zugkraft des Flugelements zur Erzeugung von Energie nutzen, beispielsweise durch Wandlung von Zugkraft und Weg in elektrische Energie, besteht zudem ein Bestreben darin, den Wirkungsgrad dieser Windenergieanlagen zu steigern.

Der Erfindung liegt die Aufgabe zugrunde, ein Steuerungsverfahren bzw. eine Steuerungsvorrichtung bereitzustellen, welches in der Lage ist, ein Flugelement zur Überwindung der vorgenannten Probleme in verbesserter Weise anzusteuern als im Stand der Technik möglich.

Diese Aufgabe wird erfindungsgemäß gelöst durch ein Verfahren zur Steuerung eines gefesselten Flugelements, insbesondere eines Flugdrachens, das mittels zumindest eines Zugseils mit einem Haltepunkt verbunden ist, bei dem ein Einholvorgang des Flugelements ausgeführt wird mit den Schritten:
- Steuern des Flugdrachens an den Rand eines Windfensters, innerhalb dessen das Flugelement bei einer Anströmung eines Windes mit einer vorgegebenen Windrichtung und Windstärke eine stabile Flugposition unter Aufbringung einer Zugkraft auf das Zugseil einnimmt und außerhalb dessen das Flugelement eine stabile Flugposition nicht einnehmen kann,
- Einholen des zumindest einen Zugseils,
- während des Einholens des Zugseils Bewegen des Flugelements in eine Position außerhalb des Windfensters und
- Einholen des Flugelements entlang einer Flugbahn, die zumindest teilweise außerhalb des Windfensters liegt.

Mit dem erfindungsgemäßen Steuerungsverfahren wird eine spezifische Steuerung eines Einholvorgangs ermöglicht, welche in der Lage ist, die Kräfte, welche während des Einholvorgangs auf das Flugelement und insbesondere das Zugseil wirken, erheblich zu verringern und zugleich die Geschwindigkeit, mit der das Flugelement eingeholt wird, erheblich zu erhöhen. Diese vorteilhaften Wirkungen werden erzielt, indem das Flugelement nicht, wie im Stand der Technik, in einem stationär stabilen Flugzustand im Windfenster eingeholt wird, sondern statt dessen zumindest teilweise, vorzugsweise im Wesentlichen oder vollständig entlang eines Pfades eingeholt wird, der außerhalb des Windfensters liegt. Definitionsgemäß befindet sich das Flugelement auf einem Punkt dieses Pfades außerhalb des Windfensters in keinem stationär stabilen Flugzustand, d. h. das Flugelement würde an diesem Punkt in einem instabilen Flugzustand übergehen und wäre absturzgefährdet bzw. würde abstürzen. Dieser unerwünschte instabile Flugzustand wird erfindungsgemäß dadurch überwunden, dass der Einholvorgang selbst als dynamischer Einfluss auf das Flugelement genutzt wird. Erfindungsgemäß wurde erkannt, dass durch den Einholvorgang am Flugelement eine relative Windgeschwindigkeit in Bezug auf den Haltepunkt erzeugt wird, die vorteilhaft zu einer dynamischen Stabilisierung des Flugzustands des Flugelements außerhalb des Windfensters genutzt werden kann.

Durch diese Vorgehensweise wird vorteilhaft erreicht, dass das Flugelement in einen Bereich manövriert werden kann, in dem die Windanströmung an das Flugelement niedrigere Kräfte auf das Flugelement und damit auch auf das Flugseil bewirkt als dies im Windfenster der Fall wäre. Die so einwirkenden aerodynamischen Kräfte aufgrund des scheinbaren, auf den Haltepunkt bezogenen Windes sind dabei je nach dem, wie weit das Flugelement aus dem Windfenster heraus gesteuert wird, d. h. in welchem Abstand das Flugelement zum Windfenster entlang des Pfades eingeholt wird, weitaus kleiner und ermöglichen somit eine sehr hohe Einholgeschwindigkeit des Flugelements durch Einholen des Zugseils, ohne das hierdurch zulässige Belastungsgrenzen an den lasttragenden Strukturen des Flugelementsystems überschritten werden. Grundsätzlich kann der so stattfindende Einholvorgang als ein kontrollierter Absturz außerhalb des stabilen Windfensters definiert werden oder durch einen Einholvorgang in Luv des stabilen Windfensters verstanden werden. Dabei ist grundsätzlich anzunehmen, dass der Einholpfad um so weiter vom Windfenster beabstandet sein kann, je höher die Einholgeschwindigkeit gewählt wird, da mit Erhöhung der Einholgeschwindigkeit auch der Stabilisierungseffekt durch den dadurch erzielten relativen Wind am Flugelement in gleicher Weise erhöht wird.

Gemäß einer ersten bevorzugten Ausführungsform ist vorgesehen, dass das Windfenster einen Abschnitt einer durch das Zugseil in konstanter Länge aufgespannten Sphäre einnimmt, der durch eine gekrümmte Grenze begrenzt wird, auf der das Flugelement stationär stabil gehalten werden kann, und dass das Flugelement zur Ausführung des Einholvorgangs über diese Grenze des Windfensters hinausbewegt wird. Gemäß dieser bevorzugten Ausführungsform wird bei einem typischen Windfensterzuschnitt, der bevorzugt als spitz zulaufendes Tortenstück, dessen Spitze mit dem Haltepunkt übereinstimmt, geformt ist, ein günstiger Verlauf des Einholpfades vorgeschlagen. Die Grenzen eines solchen typischen Windfensters liegen dabei beispielsweise als untere Grenze auf einer etwa horizontalen, vom Haltepunkt ausgehend leicht aufwärts gerichteten Ebene und als obere Grenze auf einer vom Haltepunkte nahezu senkrechten, leicht zur unteren Ebene geneigten Fläche definiert. Das Windfenster erstreckt sich somit über einen dreidimensionalen Raum, der ausgehend vom Haltepunkt in Lee des Haltepunkts in Bezug auf den scheinbaren Wind am Haltepunkt liegt. Dieser Raum wird lateral ebenfalls begrenzt und könnte sich in einer horizontalen Ebene seitlich um einen Winkel von weniger als 90 Grad erstrecken, je nachdem wie gut die aerodynamischen Eigenschaften des Flugelements hoch am Wind sind. Gemäß der bevorzugten Ausführungsform wird das Flugelement nun in Luv von diesem Windfenster eingeholt, d. h. es verläuft auf einem Einholpfad, der beispielsweise ein etwa senkrechter Pfad oberhalb des Haltepunkts sein kann, wobei zu verstehen ist, dass der Einholpfad auch eine gekrümmte Kurve sein kann und insbesondere auch ein Pfad, der gegenüber einer senkrecht über den Haltepunkt und quer zur scheinbaren Windrichtung am Haltepunkt liegenden Ebene deutlich in Luv verlaufen kann.

Gemäß einer weiteren bevorzugten Ausführungsform ist vorgesehen, dass das Flugelement ein beidseits um eine Mittellängsachse sich erstreckendes aerodynamisches Profil mit einer vorzugsweise zumindest teilweise, vorzugsweise vollständigen schlaffen Hülle umfasst, die mittels mehrerer, sich von beiden Seiten des aerodynamischen Profils erstreckender Steuerleinen mit einer unterhalb des Profils angeordneten Gondel verbunden ist, die mittels des Zugseils mit dem Haltepunkt verbunden ist, und durch wechselweises seitenindividuelles Verkürzen und/oder Verlängern der Steuerleinen das Flugelement gesteuert wird, durch Verkürzen des Zugseils das Flugelement eingeholt wird. Alternativ hierzu kann das Flugelement auch durch ein starres Profil ausgebildet sein, oder das Flugelement kann durch eine Kombination von starren Hüllenelementen und schlaffen Hüllenelementen gebildet werden.

Gemäß dieser bevorzugten Ausführungsform wird eine besonders vorteilhafte Steuerungsweise im Zusammenhang mit einem spezifischen Aufbau eines Flugelements eingesetzt, die sich zur Steuerung von großen Flugelementen eignet und es zugleich ermöglicht, diese großen Flugelemente in günstiger Weise hinsichtlich ihres Volumens und ihrer Abmessungen zu verringern, beispielsweise um diese nach dem Einholvorgang verstauen zu können. Dabei ist unter einer teilweise schlaffen Hülle zu verstehen, dass das Flugelement beispielsweise aus zwei Decklagen aus einem schlaffen Material, beispielsweise Gewebe, Segeltuch oder dergleichen gebildet ist, welches eine Faltung, Reffung ermöglicht, wobei dieses Gewebe durch teilweise starre, gegebenenfalls in Grenzen flexible Elemente verstärkt und in seiner aerodynamischen Form stabilisiert sein kann. Solche steifen, gegebenenfalls flexiblen Elemente können beispielsweise nach Art von Segellatten oder luftgefüllten Körpern ausgebildet sein, gegebenenfalls aber auch in Form eines starren Kitesticks in der zentralen Mittellängsachse des Flugelements angeordnet sein, um hierdurch Anlenkpunkte für Reffleinen, konstruktiven Raum für Aktuatoren oder dergleichen zu schaffen. Durch die Anordnung einer Gondel unmittelbar unterhalb des Flugelements wird ermöglicht, das ein solches Flugelement durch ein einziges Zugseil mit dem Haltepunkt verbunden wird und somit die aufgrund dieses Zugseil zu tragenden Gewichtskräfte minimiert werden. Die Länge des Zugseils entspricht dabei etwa der Flughöhe des Flugelements und die zahlreichen Steuer- und Halteleinen, welche das Flugelement in seiner aerodynamischen Form stabilisieren und zwecks Steuerung verändern, sind lediglich zwischen dem Flugelement und der Gondel über eine kurze Distanz gespannt. In der Gondel können wiederum durch Bereitstellung entsprechender Aktuatoren, Umlenkrollen und der gleichen auf die Steuerleinen entsprechende Kräfte eingebracht werden, wobei die hierfür benötigte Energie in der Gondel gespeichert oder mittels Übertragungselementen, beispielsweise eines im Zugseil verlaufenden elektrischen Leitungskabels, bereitgestellt werden kann.

Noch weiter ist es bevorzugt, dass das Flugelement ein aerodynamisches Profil mit einer zumindest teilweise, vorzugsweise vollständigen schlaffen Hülle umfasst, die während des Einholvorgangs, vorzugsweise am Ende des Einholvorgangs solcherart gerafft wird, dass sich die wirksame Windangriffsfläche des Flugelements reduziert. Gemäß dieser bevorzugten Ausführungsform wird der Einholvorgang in zusätzlicher Weise erleichtert und eine Beschleunigung des Einholvorgangs bzw. dessen Ablauf bei einer höheren Geschwindigkeit ermöglicht, indem die aerodynamisch wirksame Fläche des Flugelements beim Einholvorgang gegenüber dem vollständig nutzbaren Flächenzustand des Flugelements verringert wird. Dies kann beispielsweise durch Reffleinen erfolgen, die im Flugelement selbst oder außerhalb des Flugelements verlaufen und die aktuatorbetätigt zur Einleitung eines Einholvorgangs verkürzt werden. Durch eine solche Reffung des Flugelements kann insbesondere die Empfindlichkeit gegenüber dynamischen Änderungen der Windverhältnisse nach Richtung und Stärke verringert werden und hierdurch die Stabilität des Flugzustands auch bei dem erfindungsgemäßen Einholen auf einem Pfad außerhalb des Windfensters erhöht werden.

Gemäß einer weiter bevorzugten Ausführungsform ist vorgesehen, dass das Flugelement mit einer Winschgeschwindigkeit des Zugseils eingeholt wird und in eine Position außerhalb des Windfensters gesteuert wird, an welcher die Vektorsumme aus dem Winschgeschwindigkeitsvektor, dargestellt durch die Geschwindigkeit, mit welcher das Zugseil eingeholt wird und der Richtung, in welcher das Zugseil an der Gondel angreift, und dem in Bezug auf den Haltepunkt herrschenden scheinbaren Windgeschwindigkeitsvektor im Bereich des Windelementes, dargestellt durch die Vektorsumme aus Geschwindigkeit und Richtung des wahren Windes und einer gegebenenfalls bestehenden Fahrgeschwindigkeit und Fahrtrichtung des Haltepunktes, eine effektive Anströmung des Flugelements außerhalb des Windfensters bewirkt, die kleiner ist als die effektive Anströmung des Flugelements im Windfenster durch den in Bezug auf den Haltepunkt herrschenden scheinbaren Wind im Windfenster.

Gemäß dieser bevorzugten Ausführungsform ist unter einer effektiven Anströmung des Flugelements diejenigen Windanteile nach Stärke und Richtung zu verstehen, welche am Flugelement eine aerodynamische Kraft bewirken. Je nach Windrichtung- und stärke können sich diese effektiven Anströmungsanteile in Abhängigkeit des Anstellwinkels des Flugelements zum scheinbaren Wind ändern. Weiterhin nimmt der Einholvorgang auf diese effektive Anströmung Einfluss, da aufgrund der hierdurch bewirkten relativen Bewegung des Flugelements in Bezug auf den Haltepunkt, also insbesondere die Annäherung des Flugelements an den Haltepunkt, eine Anströmung des Flugelements in Form eines Einhol-Pfadwindes zu dem scheinbaren Wind hinzutritt. Gemäß der bevorzugten Ausführungsform ist die aus diesen gesamten Einflüssen addierte Einwirkung des Windes in Form der entsprechenden Vektoraddition der Windeinflüsse beim Einholvorgang geringer als bei einem Betrieb des Flugelements im Windfenster, insbesondere bei einem Betrieb des Flugelements im Windfenster bei Durchführung eines Einholvorgangs mit übereinstimmender Einholgeschwindigkeit. Durch diese Wahl des Einholpfades und der Einholgeschwindigkeit wird bei erhöhter Einholgeschwindigkeit erreicht, dass die hierbei auf das Flugelement und sämtliche Bauteile des Flugelementsystems wirkenden Kräfte reduziert werden, wodurch eine Erhöhung der Einholgeschwindigkeit bei zugleich Reduzierung der auf das Flugelementsystem einwirkenden Kräfte ermöglicht wird.

Gemäß einer noch weiteren bevorzugten Ausführungsform ist vorgesehen, dass das Flugelement mit einer Winschgeschwindigkeit des Zugseils eingeholt wird, welche dem 0,5 bis 1,2-fachen der Geschwindigkeit des scheinbaren Windes in Bezug auf den Haltepunkt entspricht. Erfindungsgemäß hat sich gezeigt, das bei einer 0,5 bis 1,2-fachen Geschwindigkeit des Einholens in Bezug auf die Windgeschwindigkeit des scheinbaren Windes ein bevorzugter Pfad außerhalb des Windfensters für den Einholvorgang genutzt werden kann, der bei einer stabilen dynamischen Fluglage des Flugelements einen besonders raschen Einholvorgang bei niedrigen Kräften auf das Flugelementsystem bewirkt.

Schließlich kann das erfindungsgemäße Verfahren fortgebildet werden, indem das Flugelement auf einer Flugbahn eingeholt wird, die im wesentlichen keine Bewegungsanteile in einer Richtung senkrecht zum Zugseil aufweist. Mit dieser Fortbildungsform kann die Zugseilkraft nochmals verringert werden, indem aerodynamische Auftriebskräfte, die durch eine tangential zum Zugseil auftretende Bewegung und entsprechenden Fahrtwind auftreten, vermieden werden.

Ein weiterer Aspekt der Erfindung ist eine Steuerungsvorrichtung für ein gefesseltes Flugelement, insbesondere einen Flugdrachen, das mittels zumindest eines Zugseils mit einem Haltepunkt verbunden ist, umfassend:
- eine Winsch mit einem Winschantrieb, mittels derer das Zugseil eingeholt werden kann,
- einen Aktuator zur Verkürzung und Verlängerung von Steuerleinen, welche solcherart an dem Flugelement befestigt sind, dass eine Verkürzung bzw. Verlängerung der Steuerleinen eine Steuerungsbewegung des Flugdrachens unter einer Windanströmung bewirkt,
- eine elektronische Steuerungseinheit, welche signaltechnisch mit dem Winschantrieb und dem Aktuator gekoppelt und ausgebildet ist, um den Aktuator so anzusteuern, dass das Flugelement außerhalb eines Windfensters, innerhalb dessen das Flugelement bei einer Anströmung eines Windes mit einer vorgegebenen Windrichtung und Windstärke eine stabile, statische Flugposition unter Aufbringung einer Zugkraft auf das Zugseil einnimmt und außerhalb dessen das Flugelement eine stabile, statische Flugposition nicht einnehmen kann, fliegt und hierbei gleichzeitig
- den Winschantrieb so anzusteuern, dass das Zugseil mit einer solchen Winschgeschwindigkeit eingeholt wird, dass das Flugelement eine stabile Flugposition einnimmt.

Die so ausgebildete Steuerungsvorrichtung eignet sich insbesondere dazu, um ein Steuerungsverfahren und ein Einholvorgang der zuvor beschriebenen Art auszuführen. In Bezug auf die Merkmale und Vorteile sowie Ausführungsvarianten der hierzu an der Steuerungsvorrichtung vorgesehenen Bauelemente wird Bezug genommen auf die zuvorstehenden Erläuterungen, Vorteile und Varianten zum erfindungsgemäßen Steuerungsverfahren.

Die Steuerungsvorrichtung kann fortgebildet werden, indem das Windfenster einen Abschnitt einer durch das Zugseil in konstanter Länge aufgespannten Sphäre einnimmt, der durch eine obere und untere Grenze begrenzt wird und die Steuerungseinheit ausgebildet ist, um den Aktuator so anzusteuern, dass das Flugelement zur Ausführung des Einholvorgangs über die obere Grenze des Windfensters nach außerhalb des Windfensters gesteuert wird.

Weiterhin kann die Steuerungsvorrichtung fortgebildet werden, indem das Flugelement ein aerodynamisches Profil mit einer zumindest teilweise, vorzugsweise vollständigen schlaffen Hülle umfasst, und dass das Flugelement einen zweiten Aktuator umfasst, mittels dessen eine Reffung des Flugelements bewirkt werden kann und dass die Steuerungseinheit mit dem zweiten Aktuator signaltechnisch gekoppelt ist und ausgebildet ist, um den zweiten Aktuator so anzusteuern, dass das Flugelement während des Einholvorgangs, vorzugsweise am Ende des Einholvorgangs solcherart gerefft wird, dass sich die wirksame Windangriffsfläche des Flugelements reduziert.

Weiterhin kann die Steuerungsvorrichtung fortgebildet werden, indem die Steuerungseinheit ausgebildet ist, um den Winschantrieb und den Aktuator so anzusteuern, dass das Flugelement mit einer solchen Winschgeschwindigkeit des Zugseils eingeholt und in eine Position außerhalb des Windfensters gesteuert wird, an welcher die Vektorsumme aus dem Winschgeschwindigkeitsvektor, dargestellt durch die Geschwindigkeit, mit welcher das Zugseil eingeholt wird und der Richtung, in welcher das Zugseil an der Gondel angreift, und dem in Bezug auf den Haltepunkt herrschenden scheinbaren Windgeschwindigkeitsvektor im Bereich des Windelementes, dargestellt durch die Vektorsumme aus Geschwindigkeit und Richtung des wahren Windes und einer gegebenenfalls bestehenden Fahrgeschwindigkeit und Fahrtrichtung des Haltepunktes, eine effektive Anströmung des Flugelements außerhalb des Windfensters bewirkt, die kleiner ist als die effektive Anströmung des Flugelements im Windfenster durch den in Bezug auf den Haltepunkt herrschenden scheinbaren Wind im Windfenster.

Weiterhin kann die Steuerungsvorrichtung fortgebildet werden, indem die Steuerungseinheit ausgebildet ist, um den Winschantrieb und den Aktuator so anzusteuern, dass das Flugelement mit einer Winschgeschwindigkeit des Zugseils eingeholt wird, welche dem 0,5 bis 1,2-fachen der Geschwindigkeit des scheinbaren Windes in Bezug auf den Haltepunkt entspricht.

Bezüglich dieser Fortbildungen der Steuerungsvorrichtung wird ebenfalls auf die voranstehende Erläuterung der hierzu korrespondierenden Steuerungsverfahren Bezug genommen.

Ein weiterer Aspekt der Erfindung ist ein Computerprogrammprodukt, welches ausgebildet ist, um ein Steuerungsverfahren der zuvor beschriebenen Weise auszuführen, wenn es auf einem Computer abläuft.

Ein weiterer Aspekt der Erfindung ist eine Windenergieanlage, mit einem Flugelement, welches mittels eines Zugseils an einen Haltepunkt gefesselt ist, einem Zugseil, welches das Flugelement mit einer Winsch verbindet, einem Winschantrieb zum Antreiben der Winsch, zumindest einer, vorzugsweise zwei oder mehr Steuerleinen, welche solcherart an dem Flugelement befestigt sind, dass ein wahlweises Verkürzen und/oder Verlängern der Steuerleine(n) eine Änderung der Flugrichtung des Flugelements bewirkt, einen Aktuator zum wahlweisen Verkürzen/Verlängern der Steuerleine(n), gekennzeichnet durch eine Steuerungsvorrichtung nach der zuvor beschriebenen Bauweise. Eine solche Windenergieanlage kann dazu dienen, um Energie aus Windkraft zu erzeugen, beispielsweise elektrische Energie, oder kann dazu benutzt werden, um eine Antriebsenergie in Form einer Zugkraft auf ein Fahrzeug, insbesondere ein Wasserfahrzeug zu übertragen. Die Windenergieanlage profitiert dabei von dem erfindungsgemäßen Einholvorgang in erheblichem Maße, indem die Energie und die Einholzeit, die für diesen Einholvorgang aufgewendet werden müssen, signifikant reduziert werden können und auf diese Weise der Wirkungsgrad der Windenergieanlage wirksam gesteigert werden kann. Dabei lässt sich die Arbeit aus dem Integral der Einholzugkraft über der Einholweg berechnen und eröffnet somit erfindungsgemäß, den Wirkungsgrad der Windenergieanlage durch schnelles Einholen unter Inkaufnahme einer nennenswert Zugseilkraft oder durch langsames Einholen bei erheblich reduzierter Zugseilkraft zu steigern.

Ein weiterer Aspekt der Erfindung ist die Verwendung einer Steuerungsvorrichtung der zuvor beschriebenen Bauweise zum Einholen eines als Schiffsantriebs dienenden Flugelements.

Bevorzugte Ausführungsformen werden anhand der beiliegenden Figuren erläutert. Es zeigen:
- Figur 1: Eine schematische Seitenansicht eines Flugelementes nach der Erfindung in der Verwendung als Antrieb für ein Wasserfahrzeug im normalen Fahrbetrieb,
- Figur 2: Eine Draufsicht auf die Anordnung gemäß Fig. 1,
- Figur 3: Eine Ansicht gemäß Fig. 1 in einer Phase der Einleitung eines Einholvorgangs des Flugelements,
- Figur 4: Eine Ansicht gemäß Fig. 1 in einer Phase des Einholvorgangs,
- Figur 5: Eine Ansicht gemäß Fig. 1 in einer Phase des Einholvorgangs des Flugelements,
- Figur 6: Eine Vektorgrafik mit Darstellung der Zusammenhänge der Winschgeschwindigkeit, der Windgeschwindigkeit und der aerodynamisch effektiven Windgeschwindigkeit am Flugelement, und
- Figur 7: eine schematische Darstellung einer Flugbahn eines erfindungsgemäßen Flugelementes in der Anwendung in einer Windenergieanlage..

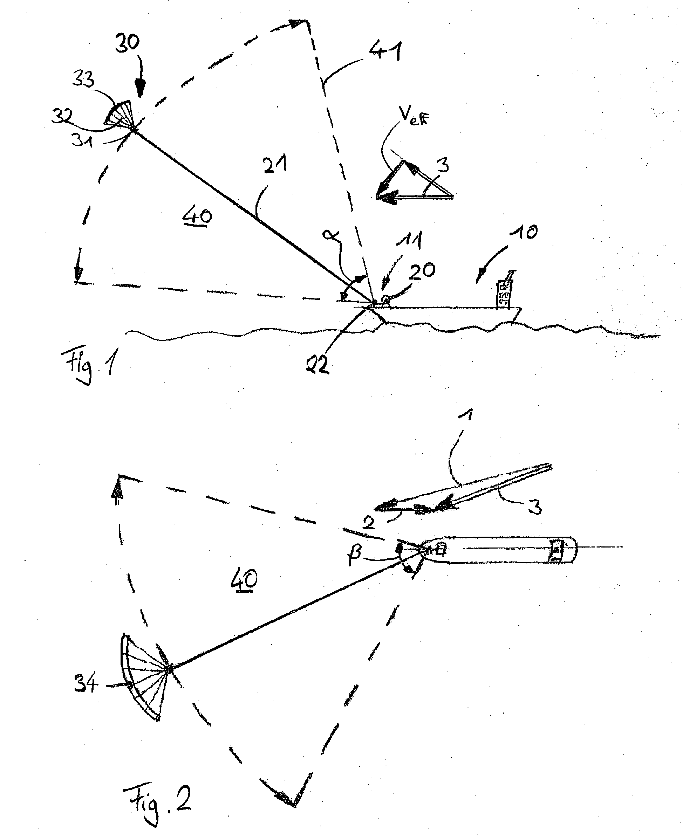

Bezugnehmend zunächst auf die Figuren 1 und 2 ist ein Wasserfahrzeug 10 gezeigt, auf dem in einem Bugbereich 11 eine Winsch 20 montiert ist. Auf der Winsch 20 ist ein Zugseil 21 aufgewickelt, das teilweise ausgefiert ist und über eine Umlenkeinrichtung 22 das Wasserfahrzeug 10 mit einem Flugelement 30 verbindet.

Die Winsch 20 und der Umlenkpunkt 22 stellen hierbei den Haltepunkt des Zugseils auf dem Wasserfahrzeug 10 dar. Das Zugseil 21 verbindet das Schiff mit einer Gondel 31, die Bestandteil des Flugelements 30 ist und sich auf gleicher Höhe wie ein mit dieser Gondel über mehrere Zug- und Steuerungsleinen 32 verbundenes aerodynamisches Profil 33 befindet. Das aerodynamische Profil 33 ist als Doppeldecklage aus Segeltuch ausgebildet und weist einen zentralen Kitestick 34 auf.

In den Figuren 1 und 2 ist eine Kurs- und Windsituation dargestellt, in der ein wahrer Wind 1 von Steuerbord achtern einfällt. Dieser wahre Wind 1 addiert sich gemeinsam mit einem Fahrtwind 2 des Wasserfahrzeugs 10 zu einem scheinbaren Wind 3, der in Bezug auf den Haltepunkt auf das Flugelement 30 einwirkt. Dieser scheinbare Wind 3 kann wiederum in einen für die aerodynamischen Auftriebskräfte wirksamen, tangential zum Zugseil wirkenden Windanteil V_{effektiv} und einen senkrecht hierzu in Richtung des Zugseils wirkenden Anteil zerlegt werden und bestimmt die auf das Zugseil 21 durch das Flugelement 30 aufgebrachten Zugkräfte. Zu dieser Betrachtung des effektiven Windanteils aus dem scheinbaren Wind tritt in allen Bereichen des Windfensters mit Ausnahme dessen Randes noch eine durch Flugbewegungen des Flugelements 30 bei konstanter Zugseillänge entstehende Fluggeschwindigkeit hinzu, die eine erhebliche Steigerung des effektiv am Flugelement angreifenden Windes erreicht. Hieraus resultiert eine erhebliche Steigerung der Zugseilkraft.

Aus der Richtung des wahren Windes, der Stärke des wahren Windes und der Fahrtrichtung und Fahrtgeschwindigkeit des Wasserfahrzeugs ergibt sich ein Windfenster 40, innerhalb dessen das Flugelement 30 in einem stationären Flugzustand stabil gehalten werden kann. Dieses Windfenster 40 wird durch einen Winkel α in einer senkrechten Ebene und einem Winkel β in einer horizontalen Ebene bestimmt. Die Winkel α und β sind in praktischen systemen übereinstimmend. Diese Winkel definieren ausgehend vom Umlenkpunkt 22 am Wasserfahrzeug 10 etwa einen halben Kegel, dessen Spitze der Haltepunkt darstellt und dessen flache untere Grenze gegebenenfalls in praktischen System durch den Horizont definiert wird. Innerhalb dieses halben Kegels kann das Flugelement stabil fliegen und an dem oberen, gekrümmten Rand, dem sich das Flugelement aus dem Windfenster heraus mit asymptotisch auf null abnehmender Geschwindigkeit annähert, kann das Flugelement stationär gehalten werden.

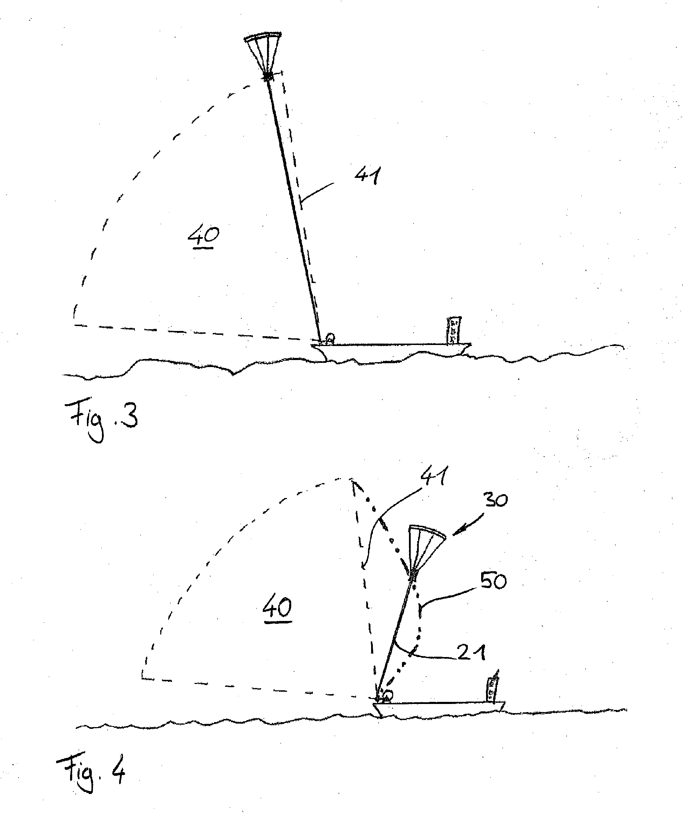

Wie aus Fig. 3 ersichtlich, wird das Flugelement zur Einleitung eines Einholvorgangs zunächst auf eine maximale Höhe an den Luv-seitigen Rand 41 dieses Windfensters gebracht. Bereits diese Manöverbewegung des Flugelements innerhalb des Windfensters kann durch einen Einholvorgang durch Rotation der Winsch unterstützt werden, dies ist jedoch für den sicheren Ablauf des Einholvorgangs nicht zwingend erforderlich, da das Flugelement bis zum Erreichen der Luv-seitigen Grenze 41 noch stationär stabil im Windfenster fliegen kann.

Der durch Betätigung der Winsch 20 und Einholen des Zugseils 21 bereits während des Manövers im Windfenster begonnene Winschvorgang oder bei Erreichen bzw. Überschreiten der Luv-seitigen Grenze 41 des Windfensters begonnene Winschvorgang erzeugt am Flugelement 30 nun eine zusätzliche Relativbewegung gegenüber der Luft, die in die Betrachtung der am Flugelement angreifenden Windkräfte einfliesst. Durch diese zusätzliche Windeinflussgröße wird es möglich, das Flugelement dynamisch außerhalb des Windfensters 40 zu bewegen und auf einen dynamischen Einholpfad 50 in Luv von diesem Windfenster einzuholen. Die Dynamik des Einholpfades resultiert dabei aus dem Einholvorgang des Zugseils. Sie kann von Flugbewegungen tangential zum Zugseil überlagert werden, dies ist für den erfindungsgemäßen Einholvorgang aber nicht erforderlich und aufgrund der damit verbundenen Zugseilkrafterhöhung in der regel auch nicht vorteilhaft. Der Einholpfad 50 kann dabei, wie aus Fig. 4 ersichtlich, auf einer gekrümmten Kurve verlaufen und gegebenenfalls einen beträchtlichen Abstand von der Luv-seitigen Grenze 41 des Windfensters 40 aufweisen. Es ist zu verstehen, dass der Verlauf des Einholpfades 50 von mehreren Faktoren abhängt, darunter die Fahrtgeschwindigkeit des Schiffes und die Einholgeschwindigkeit des Zugseils, d. h. die Winschgeschwindigkeit.

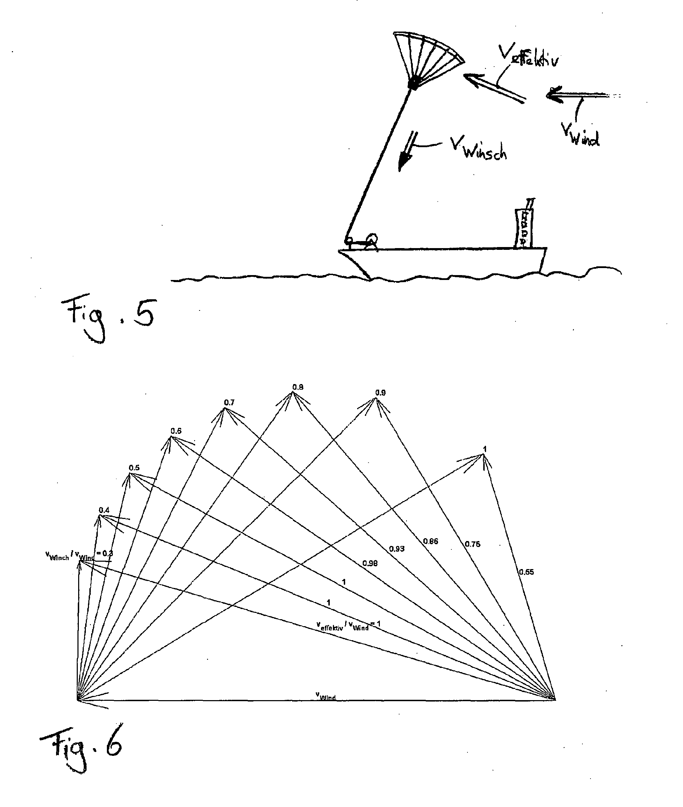

Fig. 5 verdeutlicht die Windverhältnisse am Flugelement während des Einholvorgangs. Wie ersichtlich ist, stellt sich eine effektive Windanströmung an dem Flugelement ein, die sich aus den Komponenten des scheinbaren Windes und der Winschrichtung zusammensetzt, die das Flugelement 30 in aerodynamisch wirksamer Weise anströmt. Dieser effektiv wirksam anströmende Windanteil bewirkt eine Zugkraft auf das Seil und in dem Bestreben, das Flugelement 30 in möglichst kurzer Zeit und mit möglichst geringer Zugkraft auf das Seil einzuholen, kann die insgesamt benötigte Energie für den Einholvorgang signifikant gesenkt werden.

Fig. 6 zeigt in Form einer Vektorgrafik mit insgesamt acht unterschiedlichen Einholsteuerungsvorgängen, wie erfindungsgemäß die Einholgeschwindigkeit erhöht bzw. die während des Einholvorgangs wirkenden Kräfte reduziert werden können. Wie zu erkennen ist, ergeben sich bei dem hier beispielshaft untersuchten System bei einem Verhältnis der Winschgeschwindigkeit zur Windgeschwindigkeit von 0,3, 0,4 und 0,5 noch kein tatsächlicher Vorteil hinsichtlich des effektiven Windes zum Wind-Verhältnis. Ab einem Verhältnis der Winschgeschwindigkeit zur Windgeschwindigkeit von 0,6 und höher kann jedoch der effektiv anströmende Wind im Verhältnis zur Windgeschwindigkeit maßgeblich reduziert werden und es wird erreicht, wenn die Winschgeschwindigkeit der Windgeschwindigkeit entspricht, in etwa eine Halbierung des effektiv wirksamen Windes zur Windgeschwindigkeit erreicht, also eine Reduktion des Auftriebs um 75%.

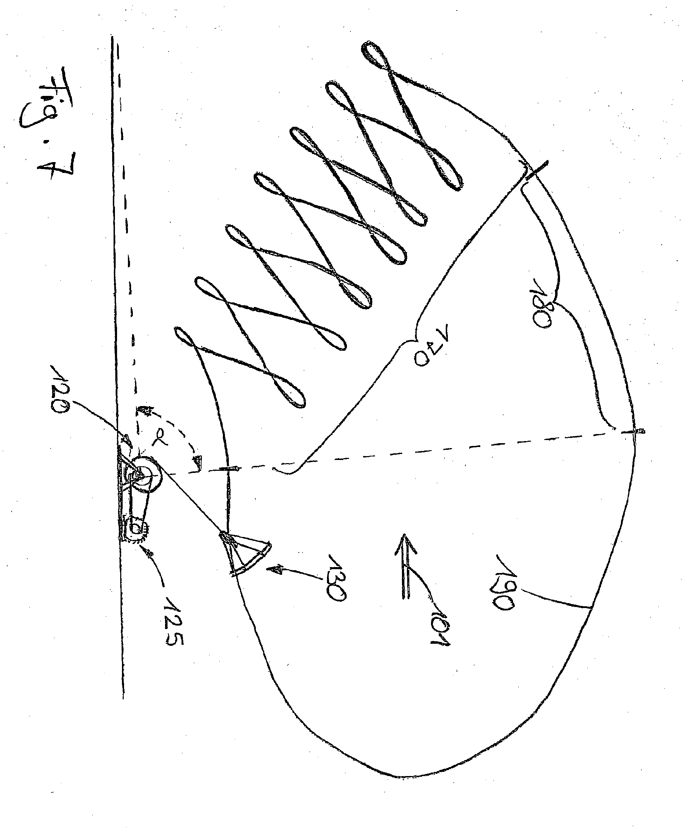

Fig. 7 zeigt hierbei einen Bewegungspfad eines Flugelementes, welches für eine Windenergieanlage genutzt wird. Ausgehend von einer an einen elektrischen Generator 125 gekoppelten Winsch 120 wird das Flugelement 130 zunächst entlang eines Ausfierpfades 170 in einem durch den Winkel α aufgespannten Windfenster in Lee von der Winsch 120 in Bezug auf den Wind 101 ausgefiert. Entlang dieses Ausfierpfades verrichtet das Flugelement an der Winsch Arbeit, die durch mechanische Kopplung der Winsch an den Generator 125 in diesem in elektrische Energie gewandelt wird. Zur Effizienzsteigerung wird angestrebt, diese Ausfierbewegung bei einer möglichst hohen Zugseilkraft über einen möglichst langen Zeitraum durchzuführen. Zu diesem Zweck wird das Flugelement auf dem Ausfierpfad senkrecht zum Zugseil bewegt, beispielsweise - wie dargestellt - in Form von Achten oder in Form von Kreisen, die in einer Ebene senkrecht zum Zugseil liegen.

Sobald das Zugseil maximal ausgefiert ist wird ein Einholvorgang gestartet. Dieser Einholvorgang ist in Fig. 7 entlang eines Transferpfades 180 dargestellt, entlang dessen sich das Flugelement innerhalb des Windfensters etwa über einen Punkt oberhalb der Winsch 120 an den Rand des Windfensters bewegt. Ausgehend von diesem Rand wird das Flugelement dann dynamisch unter aktivem Einwinschen in eine Position in Luv von der Winsch bewegt. Es ist aber zu verstehen, dass eine solche Position in Luv von der Winsch ebenso auch durch eine Bewegung des Flugelements auf einer horizontalen Flugbahn erreicht werden kann, das heißt ohne Höhengewinn des Flugelements, beispielsweise auf einer Flugbahn, die das Flugelement auf konstanter Höhe an den Rand des Windfensters führt.

Bereits während des Transferpfades 180 kann das Zugseil mit geringer Winschgeschwindigkeit eingeholt werden. Bei Erreichen der Grenze des Windfensters und Verlassen des Windfensters wird die Winschgeschwindigkeit erhöht und ist zur Stabilisierung der Flugstabilität des Flugelements auch erforderlich. Außerhalb des Windfensters wird das Flugelement entlang eines Einholpfades 190 bis auf eine untere Zugseillänge eingeholt und hierbei durch eine hohe Winschgeschwindigkeit in seiner Fluglage stabilisiert. Nach Erreichen der unteren Zugseillänge wird erneut ein Ausfiervorgang entlang des Ausfierpfades 170 gestartet und der Zyklus zur Energiegewinnung beginnt von Neuem.

## Patentansprüche

1. Verfahren zur Steuerung eines gefesselten Flugelements (30), insbesondere eines Flugdrachens, das mittels zumindest eines Zugseils (21) mit einem Haltepunkt (20, 22) verbunden ist, bei dem ein Einholvorgang des Flugelements ausgeführt wird mit den Schritten:
- Steuern des Flugdrachens an den Rand (41) eines Windfensters (40), innerhalb dessen das Flugelement bei einer Anströmung eines Windes mit einer vorgegebenen Windrichtung und Windstärke eine stabile Flugposition unter Aufbringung einer Zugkraft auf das Zugseil einnimmt und außerhalb dessen das Flugelement eine stabile Flugposition nicht einnehmen kann,
- Einholen des zumindest einen Zugseils,
- während des Einholens des Zugseils Bewegen des Flugelements in eine Position außerhalb des Windfensters und
- Einholen des Flugelements entlang einer Flugbahn (50), die zumindest teilweise außerhalb des Windfensters (40) liegt.

2. Verfahren nach Anspruch 1,
**dadurch gekennzeichnet, dass** das Windfenster einen Abschnitt einer durch das Zugseil (21) in konstanter Länge aufgespannten Sphäre einnimmt, der durch eine gekrümmte Grenze begrenzt wird, auf der das Flugelement stationär stabil gehalten werden kann, und dass das Flugelement zur Ausführung des Einholvorgangs über diese Grenze des Windfensters hinausbewegt wird.

3. Verfahren nach Anspruch 1 oder 2,
**dadurch gekennzeichnet, dass** das Flugelement ein beidseits um eine Mittellängsachse sich erstreckendes aerodynamisches Profil (33) mit einer vorzugsweise zumindest teilweise, vorzugsweise vollständigen schlaffen Hülle umfasst, die mittels mehrerer, sich von beiden Seiten des aerodynamischen. Profils erstreckender Steuerleinen (32) mit einer unterhalb des Profils angeordneten Gondel (31) verbunden ist, die mittels des Zugseils (21) mit dem Haltepunkt verbunden ist, und
- durch wechselweises seitenindividuelles Verkürzen und/oder Verlängern der Steuerleinen das Flugelement gesteuert wird,
- durch Verkürzen des Zugseils das Flugelement eingeholt wird.

4. Verfahren nach Anspruch 1,
**dadurch gekennzeichnet, dass** das Flugelement ein aerodynamisches Profil mit einer zumindest teilweise, vorzugsweise vollständigen schlaffen Hülle umfasst, die während des Einholvorgangs, vorzugsweise am Ende des Einholvorgangs solcherart gerefft wird, dass sich die wirksame Windangriffsfläche des Flugelements reduziert.

5. Verfahren nach einem der vorhergehenden Ansprüche,
**dadurch gekennzeichnet, dass** das Flugelement mit einer Winschgeschwindigkeit des Zugseils eingeholt wird und in eine Position außerhalb des Windfensters gesteuert wird, an welcher die Vektorsumme aus
- dem Winschgeschwindigkeitsvektor, dargestellt durch die Geschwindigkeit, mit welcher das Zugseil eingeholt wird und der Richtung, in welcher das Zugseil an der Gondel angreift, und
- dem in Bezug auf den Haltepunkt herrschenden scheinbaren Windgeschwindigkeitsvektor im Bereich des Windelementes, dargestellt durch die Vektorsumme aus Geschwindigkeit und Richtung des wahren Windes und einer gegebenenfalls bestehenden Fahrgeschwindigkeit und Fahrtrichtung des Haltepunktes,
eine effektive Anströmung des Flugelements außerhalb des Windfensters bewirkt, die kleiner ist als die effektive Anströmung des Flugelements im Windfenster durch den in Bezug auf den Haltepunkt herrschenden scheinbaren Wind im Windfenster.

6. Verfahren nach einem der vorhergehenden Ansprüche,
**dadurch gekennzeichnet, dass** das Flugelement mit einer Winschgeschwindigkeit des Zugseils eingeholt wird, welche dem 0,5 bis 1,2-fachen der Geschwindigkeit des scheinbaren Windes in Bezug auf den Haltepunkt entspricht.

7. Verfahren nach einem der vorhergehenden Ansprüche,
**dadurch gekennzeichnet, dass** das Flugelement auf einer Flugbahn eingeholt wird, die im wesentlichen keine Bewegungsanteile in einer Richtung senkrecht zum Zugseil aufweist.

8. Steuerungsvorrichtung für ein gefesseltes Flugelement (30), insbesondere einen Flugdrachen, das mittels zumindest eines Zugseils (21) mit einem Haltepunkt (20, 22) verbunden ist, umfassend:
- eine Winsch (20) mit einem Winschantrieb, mittels derer das Zugseil eingeholt werden kann,
- einen Aktuator zur Verkürzung und Verlängerung von Steuerleinen, welche solcherart an dem Flugelement befestigt sind, dass eine Verkürzung bzw. Verlängerung der Steuerleinen eine Steuerungsbewegung des Flugdrachens bewirkt,
- eine elektronische Steuerungseinheit, welche signaltechnisch mit dem Winschantrieb und dem Aktuator gekoppelt und ausgebildet ist, um den Aktuator anzusteuern, **dadurch gekennzeichnet, daß** der Aktuator so angesteuert ist, dass das Flugelement außerhalb eines Windfensters, innerhalb dessen das Flugelement bei einer Anströmung eines Windes mit einer vorgegebenen Windrichtung und Windstärke eine stabile, statische Flugposition unter Aufbringung einer Zugkraft auf das Zugseil einnimmt und außerhalb dessen das Flugelement eine stabile, statische Flugposition nicht einnehmen kann, fliegt und hierbei gleichzeitig
- den Winschantrieb so anzusteuern, dass das Zugseil mit einer solchen Winschgeschwindigkeit eingeholt wird, dass das Flugelement eine stabile Flugposition einnimmt.

9. Steuerungsvorrichtung nach Anspruch 8,
**dadurch gekennzeichnet, dass** das Windfenster (40) einen Abschnitt einer durch das Zugseil in konstanter Länge aufgespannten Sphäre einnimmt, der durch eine obere und untere Grenze begrenzt wird und die Steuerungseinheit ausgebildet ist, um den Aktuator so anzusteuern, dass das Flugelement zur Ausführung des Einholvorgangs über die obere Grenze des Windfensters nach außerhalb des Windfensters gesteuert wird.

10. Steuerungsvorrichtung nach Anspruch 8 oder 9,
**dadurch gekennzeichnet, dass** das Flugelement ein aerodynamisches Profil mit einer zumindest teilweise, vorzugsweise vollständigen schlaffen Hülle umfasst,
und dass die Steuerungsvorrichtung einen zweiten Aktuator umfasst, mittels dessen eine Reffung des Flugelements bewirkt werden kann
und dass die Steuerungseinheit mit dem zweiten Aktuator signaltechnisch gekoppelt ist und ausgebildet ist, um den zweiten Aktuator so anzusteuern, dass das Flugelement während des Einholvorgangs, vorzugsweise am Ende des Einholvorgangs solcherart gerefft wird, dass sich die wirksame Windangriffsfläche des Flugelements reduziert.

11. Steuerungsvorrichtung nach einem der vorhergehenden Ansprüche 8-10,
**dadurch gekennzeichnet, dass** die Steuerungseinheit ausgebildet ist, um den Winschantrieb und den Aktuator so anzusteuern, dass das Flugelement mit einer solchen Winschgeschwindigkeit des Zugseils eingeholt und in eine Position außerhalb des Windfensters gesteuert wird, an welcher die Vektorsumme aus
- dem Winschgeschwindigkeitsvektor, dargestellt durch die Geschwindigkeit, mit welcher das Zugseil eingeholt wird und der Richtung, in welcher das Zugseil an der Gondel angreift, und
- dem in Bezug auf den Haltepunkt herrschenden scheinbaren Windgeschwindigkeitsvektor im Bereich des Windelementes, dargestellt durch die Vektorsumme aus Geschwindigkeit und Richtung des wahren Windes und einer gegebenenfalls bestehenden Fahrgeschwindigkeit und Fahrtrichtung des Haltepunktes,
eine effektive Anströmung des Flugelements außerhalb des Windfensters bewirkt, die kleiner ist als die effektive Anströmung des Flugelements im Windfenster durch den in Bezug auf den Haltepunkt herrschenden scheinbaren Wind im Windfenster.

12. Steuerungsvorrichtung nach einem der vorhergehenden Ansprüche 8-11,
**dadurch gekennzeichnet, dass** die Steuerungseinheit ausgebildet ist, um den Winschantrieb und den Aktuator so anzusteuern, dass das Flugelement mit einer Winschgeschwindigkeit des Zugseils eingeholt wird, welche dem 0,5 bis 1,2-fachen der Geschwindigkeit des scheinbaren Windes in Bezug auf den Haltepunkt entspricht.

13. Computerprogrammprodukt, welches ausgebildet ist, um ein Verfahren nach einem der vorhergehenden Ansprüche 1 - 7 auszuführen, wenn es auf einem Computer abläuft.

14. Windenergieanlage, mit
- einem Flugelement, welches mittels eines Zugseils an einen Haltepunkt gefesselt ist,
- einem Zugseil, welches das Flugelement mit einer Winsch verbindet,
- einem Winschantrieb zum Antreiben der Winsch,
- zumindest einer, vorzugsweise zwei oder mehr Steuerleinen, welche solcherart an dem Flugelement befestigt sind, dass ein wahlweises Verkürzen und/oder Verlängern der Steuerleine(n) eine Änderung der Flugrichtung des Flugelements bewirkt,
- einen Aktuator zum wahlweisen Verkürzen/Verlängern der Steuerleine(n),
**gekennzeichnet durch** eine Steuerungsvorrichtung nach einem der vorhergehenden Ansprüche 8-12.

15. Verwendung einer Steuerungsvorrichtung nach einem der vorhergehenden Ansprüche 8-12 zum Einholen eines als Schiffsantriebs dienenden Flugelements.

## Claims

1. Method for controlling a tethered flying element (30), in particular a kite, which is connected to a retaining point (20, 22) by means of at least one tension rope (21), in which a pull-in procedure for a flying element is implemented with the steps:
- Controlling the kite at the edge (41) of a wind window (40), inside of which the flying element assumes a stable flying position while a tensile force is applied to the tension rope when a wind having a specified wind direction and wind intensity is incident on the flying element and outside of which the flying element cannot assume a stable flying position,
- Pulling the at least one tension rope in,
- Moving the flying element into a position outside of the wind window while the tension rope is being pulled in and
- Pulling the flying element in along a flight path (50) that lies at least partially outside of the wind window (40).

2. Method according to Claim 1,
**characterised in that** the wind window occupies a section of a sphere spanned by the tension rope (21) at a constant length, which is limited by a curved limit, on which the flying element can be held stably stationary, and that the flying element is moved beyond this limit of the wind window for implementing the pull-in procedure.

3. Method according to Claim 1 or 2,
**characterised in that** the flying element comprises an aerodynamic profile (33) extending on both sides around the central longitudinal axis with a preferably at least partially, preferably completely loose shell, which by means of several steering lines (32) extending from both sides of the aerodynamic profile is connected to a gondola (31) arranged underneath the profile, which is connected to the retaining point by means of the tension rope, and
- the flying element is steered by alternately shortening and/or lengthening the steering lines on the individual sides,
- the flying element is pulled in by shortening the tension rope.

4. Method according to Claim 1,
**characterised in that** the flying element comprises an aerodynamic profile with an at least partially, preferably completely loose shell, which during the pull-in procedure, preferably at the end of the pull-in procedure is reefed in such a manner that the effective wind-exposed surface of the flying element is reduced.

5. Method according to any one of the preceding claims,
**characterised in that** the flying element is pulled in with a winch velocity of the tension rope and is steered into a position outside of the wind window, at which the vector sum from
- the winch velocity vector, represented by the velocity, with which the tension rope is pulled in and the direction, in which the tension rope engages the gondola, and
- the apparent winch velocity vector prevailing with regard to the retaining point in the area of the wind element, represented by the vector sum from the velocity and direction of the true wind and a possibly existing travelling velocity and travelling direction of the retaining point,
causes an effective incident flow of the flying element outside of the wind window, which is less than the effective incident flow of the flying element in the wind window as a result of the apparent wind in the wind window prevailing in regard to the retaining point.

6. Method according to any one of the preceding claims,
**characterised in** the flying element is pulled in with a winch velocity of the tension rope, which corresponds to 0.5 to 1.2 times the velocity of the apparent wind in regard to the retaining point.

7. Method according to any one of the preceding claims,
**characterised in that** the flying element is pulled in on the flying path, which essentially has no movement components in a direction perpendicular to the tension rope.

8. Control device for a tethered flying element (30), in particular a kite, which is connected to a retaining point (20, 22) by means of at least one tension rope (21), comprising:
- a winch (20) with a winch drive, by means of which the tension rope can be pulled in,
- an actuator for the shortening and lengthening of steering lines, which are fastened on the flying element in such a manner that a shortening or lengthening of the steering lines causes a steering movement of the kite,
- an electronic control unit, which is coupled by means of signals with the winch drive and the actuator and is designed, in order to trigger the actuator, **characterised in that** the actuator is triggered so that the flying element flies outside of a wind window, inside of which the flying element assumes a stable, static flying position while a tensile force is applied to the tension rope when a wind having a specified wind direction and intensity is incident on the flying element and outside of which the flying element cannot assume a stable, static flying position and here at the same time
- to trigger the winch drive so that the tension rope is pulled in with such a winch velocity, that the flying element assumes a stable flying position.

9. Control device according to Claim 8,
**characterised in that** the wind window (40) occupies a section of a sphere spanned by the tension rope (21) at a constant length, which is limited by an upper and lower limit and the control unit is designed in order to trigger the actuator so that the flying element is steered beyond the upper limit of the wind window towards the outside of the wind window for implementing the pull-in procedure.

10. Control device according to Claim 8 or 9,
**characterised in that** the flying element comprises an aerodynamic profile with an at least partially, preferably completely loose shell,
and that the control device comprises a second actuator, by means of which the reefing of the flying element can be effected
and that the control unit is coupled by means of signals with the second actuator and is designed in order to trigger the second actuator so that the flying element is reefed during the pull-in procedure, preferably at the end of the pull-in procedure in such a manner, that the effective wind-exposed surface of the flying element is reduced.

11. Control device according to any one of the preceding Claims 8-10,
**characterised in that** the control unit is designed in order to trigger the winch drive and the actuator so that the flying element is pulled in with such a winch velocity of the tension rope and is steered into a position outside of the wind window, at which the vector sum from
- the winch velocity vector, represented by the velocity, with which the tension rope is pulled in and the direction, in which the tension rope engages the gondola, and
- the apparent winch velocity vector prevailing with regard to the retaining point in the area of the wind element, represented by the vector sum from the velocity and direction of the true wind and a possibly existing travelling velocity and travelling direction of the retaining point,
causes an effective incident flow of the flying element outside of the wind window, which is less than the effective incident flow of the flying element in the wind window as a result of the apparent wind in the wind window prevailing in regard to the retaining point.

12. Control device according to any one of the preceding Claims 8-11,
**characterised in that** the control unit is designed, in order to trigger the winch drive and the actuator so that the flying element is pulled in with a winch velocity of the tension rope, which corresponds to 0.5 to 1.2 times the velocity of the apparent wind in regard to the retaining point.

13. Computer program product, which is designed, in order to implement a method according to one of the preceding Claims 1 - 7, if it runs on a computer.

14. Wind energy plant, with
- a flying element, which is tethered by means of a tension rope at a retaining point,
- a tension rope, which connects the flying element to a winch,
- a winch drive for driving the winch,
- at least one, preferably two or more steering lines, which are fastened to the flying element in such a manner that an optional shortening and/or lengthening of the steering line(s) causes a change in the flight direction of the flying element,
- an actuator for the optional shortening/lengthening of the steering line(s),
**characterised by** a control device according to one of the preceding Claims 8-12.

15. Use of a control device according to any one of the preceding Claims 8-12 for pulling in a flying element serving as ship propulsion.

## Revendications

1. Procédé servant à commander un élément volant (30) amarré, en particulier un cerf-volant, qui est relié à un point de retenue (20, 22) au moyen au moins d'un câble de traction (21), dans lequel une opération de halage de l'élément volant est exécutée avec les étapes suivantes :
- la commande du cerf-volant au niveau du bord (41) d'une fenêtre de vent (40), à l'intérieur de laquelle l'élément volant adopte, lorsqu'un vent souffle dans une direction de vent et à une intensité de vent prédéfinies, une position de vol stable avec application d'une force de traction sur le câble de traction et en dehors de laquelle l'élément volant ne peut pas adopter une position de vol stable ;
- le halage du câble de traction au moins au nombre de un ;
- le déplacement de l'élément volant dans une position en dehors de la fenêtre de vent au cours du halage du câble de traction ; et
- le halage de l'élément volant le long d'une trajectoire de vol (50), qui se trouve au moins en partie en dehors de la fenêtre de vent (40).

2. Procédé selon la revendication 1,
**caractérisé en ce que** la fenêtre de vent adopte un segment d'une sphère formée par le câble de traction (21) sur une longueur constante, lequel est délimité par une limite incurvée, sur laquelle l'élément volant peut être maintenu de manière immobile et stable, et **en ce que** l'élément volant se déplace au-delà de ladite limite de la fenêtre de vent aux fins de l'exécution de l'opération de halage.

3. Procédé selon la revendication 1 ou 2,
**caractérisé en ce que** l'élément volant comprend un profil (33) aérodynamique s'étendant de part et d'autre autour d'un axe longitudinal médian, pourvu d'une enveloppe de préférence au moins en partie lâche, de préférence en totalité lâche, laquelle enveloppe est reliée à une nacelle (31) disposée en dessous du profil au moyen de plusieurs cordelettes de commande (32) s'étendant des deux côtés du profil aérodynamique, laquelle nacelle est reliée au point de retenue au moyen du câble de traction (21), et
- **en ce que** l'élément volant est commandé en raccourcissant et/ou en allongeant les cordelettes de commande en alternance de chaque côté individuellement,
- **en ce que** l'élément volant est halé en raccourcissant le câble de traction.

4. Procédé selon la revendication 1,
**caractérisé en ce que** l'élément volant comprend un profil aérodynamique pourvu d'une enveloppe au moins en partie lâche, de préférence en totalité lâche, laquelle est arisée au cours de l'opération de halage, de préférence à la fin de l'opération de halage de telle manière que la surface de prise au vent active de l'élément volant se réduit.

5. Procédé selon l'une quelconque des revendications précédentes,
**caractérisé en ce que** l'élément volant est halé à une vitesse de cabestan du câble de traction et est commandé dans une position en dehors de la fenêtre de vent, au niveau de laquelle la somme vectorielle
- du vecteur de vitesse de cabestan, représenté par la vitesse, à laquelle le câble de traction est halé, et de la direction, dans laquelle le câble de traction vient en prise au niveau de la nacelle, et
- du vecteur de vitesse du vent apparent régnant par rapport au point de retenue dans la zone de l'élément de vent, représenté par la somme vectorielle de la vitesse et de la direction du vent réel, et d'une vitesse et direction de déplacement éventuellement existantes du point de retenue,
entraîne une exposition effective de l'élément volant en dehors de la fenêtre de vent, laquelle est moins importante que l'exposition effective de l'élément volant dans la fenêtre de vent au vent apparent régnant par rapport au point de retenue dans la fenêtre de vent.

6. Procédé selon l'une quelconque des revendications précédentes,
**caractérisé en ce que** l'élément volant est halé à une vitesse de cabestan du câble de traction, laquelle présente une valeur correspondante égale à 0,5 fois à 1,2 fois la vitesse du vent apparent par rapport au point de retenue.

7. Procédé selon l'une quelconque des revendications précédentes,
**caractérisé en ce que** l'élément volant est halé sur une trajectoire de vol, qui ne présente essentiellement aucune composante de déplacement dans une direction de manière perpendiculaire par rapport au câble de traction.

8. Dispositif de commande destiné à un élément volant (30) amarré, en particulier à un cerf-volant, lequel élément volant est relié à un point de retenue (20, 22) au moyen au moins d'un câble de traction (21), comprenant :
- un cabestan (20) pourvu d'un entraînement de cabestan, au moyen duquel le câble de traction peut être halé,
- un actionneur servant à raccourcir ou à allonger des cordelettes de commande, qui sont fixées au niveau de l'élément volant de telle manière qu'un raccourcissement ou un allongement des cordelettes de commande entraîne un déplacement de commande du cerf-volant,
- une unité de commande électronique, qui est couplée selon une technique de signal à l'entraînement de cabestan et à l'actionneur et qui est réalisée pour commander l'actionneur, **caractérisé en ce que** l'actionneur est commandé de telle manière que l'élément volant vol en dehors d'une fenêtre de vent dans laquelle l'élément volant adopte, lorsqu'un vent souffle selon une direction de vent et à une intensité de vent prédéfinies, une position de vol stable, statique, avec application d'une force de traction sur le câble de traction et en dehors de laquelle l'élément volant ne peut pas adopter une position de vol stable, statique, et
- laquelle unité de commande est dans le cas présent, par là même, réalisée pour commander l'entraînement de cabestan de telle sorte que le câble de traction peut être halé à une vitesse de cabestan telle que l'élément volant adopte une position de vol stable.

9. Dispositif de commande selon la revendication 8,
**caractérisé en ce que** la fenêtre de vent (40) adopte un segment d'une sphère formée par le câble de traction à une longueur constante, lequel est délimité part une limite supérieure et par une limite inférieure, et **en ce que** l'unité de commande est réalisée pour commander l'actionneur de sorte que l'élément volant est commandé au-dessus de la limite supérieure de la fenêtre de vent vers l'extérieur de la fenêtre de vent aux fins de l'exécution de l'opération de halage.

10. Dispositif de commande selon la revendication 8 ou 9,
**caractérisé en ce que** l'élément volant comprend un profil aérodynamique pourvu d'une enveloppe au moins en partie lâche, de préférence en totalité lâche,
et **en ce que** le dispositif de commande comprend un deuxième actionneur, au moyen duquel l'élément volant peut être arisé,
et **en ce que** l'unité de commande est couplée selon une technique de signal au deuxième actionneur et est réalisée pour commander le deuxième actionneur de sorte que l'élément volant est arisé au cours de l'opération de halage, de préférence à la fin de l'opération de halage, d'une manière telle que la surface de prise au vent active de l'élément volant se réduit.

11. Dispositif de commande selon l'une quelconque des revendications précédentes 8 à 10,
**caractérisé en ce que** l'unité de commande est réalisée pour piloter l'entraînement de cabestan et l'actionneur de sorte que l'élément volant est halé à une vitesse de cabestan de ce type du câble de traction et est commandé dans une position en dehors de la fenêtre de vent, au niveau de laquelle la somme vectorielle
- du vecteur de vitesse de cabestan, représenté par la vitesse, à laquelle le câble de traction est halé, et de la direction, dans laquelle le câble de traction vient en prise avec la nacelle, et
- du vecteur de vitesse de vent apparent régnant par rapport au point de retenue dans la zone de l'élément de vent, représenté par la somme vectorielle de la vitesse et de la direction du vent réel et d'une vitesse et d'une direction de déplacement existantes éventuellement du point de retenue,
entraîne une exposition effective de l'élément volant en dehors de la fenêtre de vent qui est moins importante que l'exposition effective de l'élément volant dans la fenêtre de vent au vent apparent régnant par rapport au point de retenue dans la fenêtre de vent.

12. Dispositif de commande selon l'une quelconque des revendications précédentes 8 à 11,
**caractérisé en ce que** l'unité de commande est réalisée pour commander l'entraînement de cabestan et l'actionneur de sorte que l'élément volant est halé à une vitesse de cabestan du câble de traction, laquelle présente une valeur correspondante égale à 0,5 à 1,2 fois la vitesse du vent apparent par rapport au point de retenue.

13. Produit de programme informatique, qui est réalisé pour exécuter un procédé selon l'une quelconque des revendications précédentes 1 à 7, lorsqu'il est lancé sur un ordinateur.

14. Eolienne, comprenant
- un élément volant, qui est arrimé au niveau d'un point de retenue au moyen d'un câble de traction,
- un câble de traction, qui relie l'élément volant à un cabestan,
- un entraînement de cabestan servant à entraîner le cabestan,
- au moins une, de préférence deux cordelettes de commande ou plus, qui sont fixées au niveau de l'élément volant d'une manière telle qu'un raccourcissement et/ou un allongement au choix de la ou des cordelettes de commande entraînent une modification de la direction de vol de l'élément volant,
- un actionneur servant à raccourcir/allonger au choix la ou les cordelettes de commande,
**caractérisée par** un dispositif de commande selon l'une quelconque des revendications précédentes 8 à 12.

15. Utilisation d'un dispositif de commande selon l'une quelconque des revendications précédentes 8 à 12 servant à haler un élément volant faisant office d'entraînement de navire.
